# EUROPEAN PATENT SPECIFICATION

(11) **EP 0 972 325 B1**
(45) Date of publication and mention of the grant of the patent: **30.10.2002**
(21) Application number: 97919645.8
(22) Date of filing: 23.04.1997
(51) Int. Cl.: H02G 3/08, H01R 9/24

(54) **MULTIPHASE AND MULTIDIRECTIONAL TERMINAL BOX FOR CONNECTING ELECTRIC LINES GENERALLY, ESPECIALLY FOR CONNECTING PULL BOXES**
MEHRPHASIGE UND MEHRWEG-ANSCHLUSSDOSE FÜR ELEKTRISCHE LEITUNGEN, INSBESONDERE ZUM ANSCHLUSS VON ABZWEIGDOSEN
BOITE DE CONNEXION POLYPHASEE ET MULTIDIRECTIONNELLE DE LIGNES ELECTRIQUES EN GENERAL ET NOTAMMENT DE BOITIERS DE DERIVATION

(30) Priority: 27.03.1997 IT MI970717
(43) Date of publication of application: 19.01.2000
(73) Proprietor: Elettroplus S.r.l., 20122 Milano (IT)
(72) Inventor: PAPIS, Costantina, I-24100 Bergamo (IT)
(74) Representative: Filippi, Remo
(86) International application number: IT9700095
(87) International publication number: WO98044611

(56) References cited:
- EP-A- 0 352 649
- FR-A- 2 456 403
- US-A- 2 463 033
- US-A- 3 717 840
- US-A- 4 050 770
- US-A- 4 148 546

## Description

The invention concerns terminal boxes in general used for connecting a large number of electric lines supplying current, for telephones and for other such purposes.

Problems are commonly encountered in connecting up a number of electric lines, especially ones with more than one phase, since, in a group of electric lines, those of the same phase must be associated.

Even if coming from opposite directions, the wires to be connected must be stripped and wound together and each group so formed must be fitted into a unipolar terminal and its contacts made.

For example, if four electric lines going in four directions are to be connected with three conductor cables each, at least three unipolar terminal boards of four conductors each will be needed for the three gorups, corresponding to the three phases.

Risks involved in these operations are commonly known as a board has to be held up in one hand while the other, holding a screwdriver, must tighten up the screw to make a stable connection.

In this precarious position a screwdriver can easily slip off the screw and more or less seriously injure the hand holding the board.

But also as said connections must be fitted into the small space inside a pull box, to reduce the considerable bulk caused by the necessary length of wires, for example twelve wires fixed in the three unipolar terminals, they must be tightly wound and pressed down so that the lid of the box can then be closed.

In doing so a wire can easily be damaged or become detached from its terminal causing inadequate contacts, overheating or even a fire.

The prior patent US-A-3 717 840 discloses a box-shaped structure to associate a number of electric conductors comprising several flat conducting and non-conducting bodies piled alternatively to form a shunt pile.

Spaced round the sides of the pile so formed are apertures to receive the bared ends of electric conductors.

When all these conductive and non-conductive flat bodies are simultaneously tightened with screws, the coated ends of the electric conductors are gripped by the flat non-conducting bodies, the bared ends of said conductors being gripped by the conductive bodies.

As a result the electric lines are gripped precariously and are liable to become spontaneously detached causing serious problems for the security and continuity of connections, it being impossible for all the coated and bared conductors to be uniformly tightened.

It is also impossible to insert and remove a few conductors only.

These difficulties are caused since it is impossible to fix screws or terminals separately for each conductor.

The prior patent FR A 2 456 403 discloses a box-like structure for connecting electric lines, with groups of holes on the lateral walls for the terminals of said electric lines.

Connection is made by separate electric insulation of flat conductive laminae with means at the holes to fix the ends of the electric lines.

No means is provided for avoiding casual contact between ends fixed by terminals for one electric phase and those on the same plane for another electric phase, thus involving serious risk of contact among electric phases which, on the contrary, must be kept entirely separate.

This risk is increased by the fixing means for one electric phase being veery close to those, and related connections, for another phase.

But if the space between said fixing means for different electric phases were greater, problems of structural bulk would arise.

The present patent application solves such problems both by providing fixing terminals and screws at various levels, all accessible from the top of the box-like structure and separately operable, and also by the presence of separate chambers at various levels inside the structure for each group of fixing terminals for different electric phases, making casual contact between such phases practically impossible, in addition to other advantages as well, now to be explained.

Subject of the disclosure is a multi-phase and multi-directional terminal board for connecting electric lines, having a box-like structure and lid of electrically insulating material, substantially parallelepiped with a square or rectangular base, sets of holes being made in the lateral walls for electric line terminals with several groups of terminals between internal means of electric insulation, at various levels.

Each terminal consists of a flat conducting lamina presenting two quadrangular bodies connected diagonally by an oblong section that supports the terminals on the edges of the free sides.

Diaphragms, orthogonal to said sides, extend from the centre line of the four sides of the box almost to its centre, the ends forming dihedral angles so dividing the box into four quadrangular substantially equal chambers.

These chambers are connected by central corridors left free by the diaphragms.

The base of the chambers on one diagonal is higher, by about the height of the terminals, than that of the other two chambers on a second diagonal at 90°.

A first group of terminals inside the two deeper chambers is placed with its central part lying over the raised corridor that connects the other two chambers and with the terminals facing downwards.

Over said first group of terminals is a first spacer of insulating material of substantially the same shape and size as the group of terminals but of a thickness corresponding substantially to their height.

A second substantially equal group of terminals is placed inside the other two chambers, its central part lying over that of the first spacer.

Over the second group of terminals is a second spacer of substantially the same shape and size.

The lid of the box-like structure is placed over said second spacer.

Holes are made in the walls, close to the insides of which terminals are placed, for access of electric lines to connect up to the terminals.

All screws for tightening terminals can be reached through holes in the lid of the box-like structure.

In one execution the terminals in the groups at various levels have U-shaped bodies with a threaded central hole to receive the tightening screw, so that two electric lines can be simultaneously tightened one on either side of the screw.

In one execution the walls of the box-structure and those of the lid match on different levels at the centre line, parallel to the base of the box, of the holes cut in the walls for access to the ends of electric lines.

The flat conducting lamina of a first group of terminals situated on the base of the box-like structure, is U-shaped and carries upward-facing terminals on its four edges.

The flat conducting lamina of a second group of terminals above the first one, after a first flat spacer of insulating material, is square in shape with four rectangular extensions to carry upward-facing terminals, the geometrical axis of the tightening screws being parallel to the geometrical axes of the screws tightening the terminals of the first group below.

Above said second group of terminals and after a second spacer of insulating material, a third group of terminals is placed, substantially the same as the second.

Above said groups of terminals and with interposition of insulating spacers, further groups, substantially similar to the previous ones, can be placed if required.

All geometrical axes of the terminal tightening screws lie at a reciprocal distance to permit access to all said screws through holes made in the lid of the box-like structure.

The invention offers evident advantages.

Connection of electric lines of different phases, laid in the required directions, is not only possible but is extremely easy.

In particular, the terminal box can be fixed inside the pull box leaving both the operator's hands free to use the screwdriver to tighten screws on outward-facing contacts that no longer face either him or his hands.

With terminal groups at different levels, as seen in the figures, 8 lines, for example, for each phase can be connected up making a total of 24 lines.

All this is done using the screwdriver on the upper part of the terminal box only, on 12 screws for twelve pairs of terminals.

In conclusiion, maximum safety is assured avoiding any risk of injury or even of a disaster due to badly made contacts that could cause a fire, also using a much smaller quantity of materials.

The construction itself of this terminal box that encloses all terminals and electrically insulating terminal-group spacers of flame-resistent material contributes to safety of plant and equipment.

Characteristics and purposes of the disclosure will be made still clearer by the following examples of its execution illustrated by diagrammatically drawn figures.

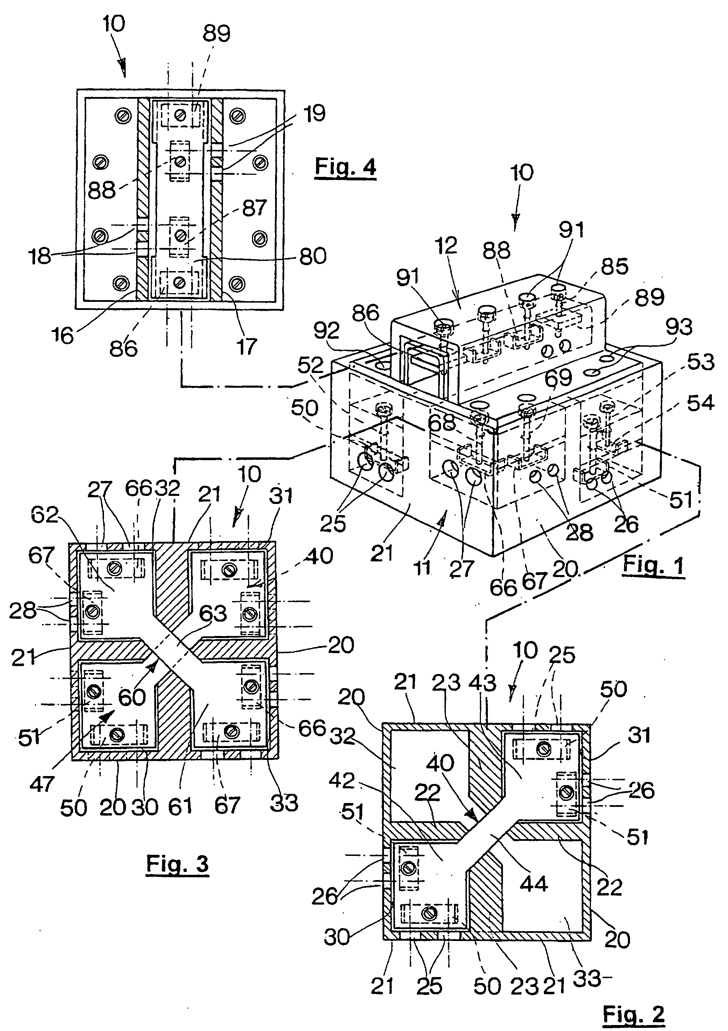

Fig.1 The box-shaped terminal box, perspective.
Fig.2 A cross section of said box made at a first group of terminals.
Fig.3 As above, at a second group of terminals.
Fig.4 As above, at an upper group of terminals.

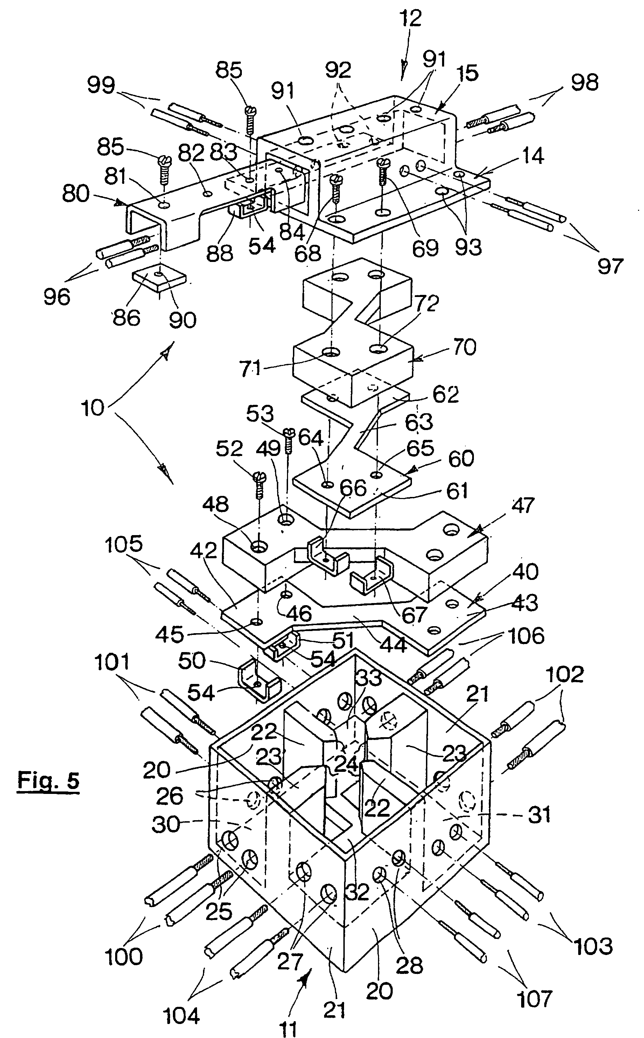

Fig.5 Exploded perspective of the terminal box.
Fig.6 Perspective of a variant of this terminal box.
Fig.7 A cross section of said box made at a first group of terminals.
Fig.8 As above, at a second group of terminals.
Fig.9 As above, at a third group of terminals.
Fig.10 The box cut longitudinally, at the screw-guiding tubes

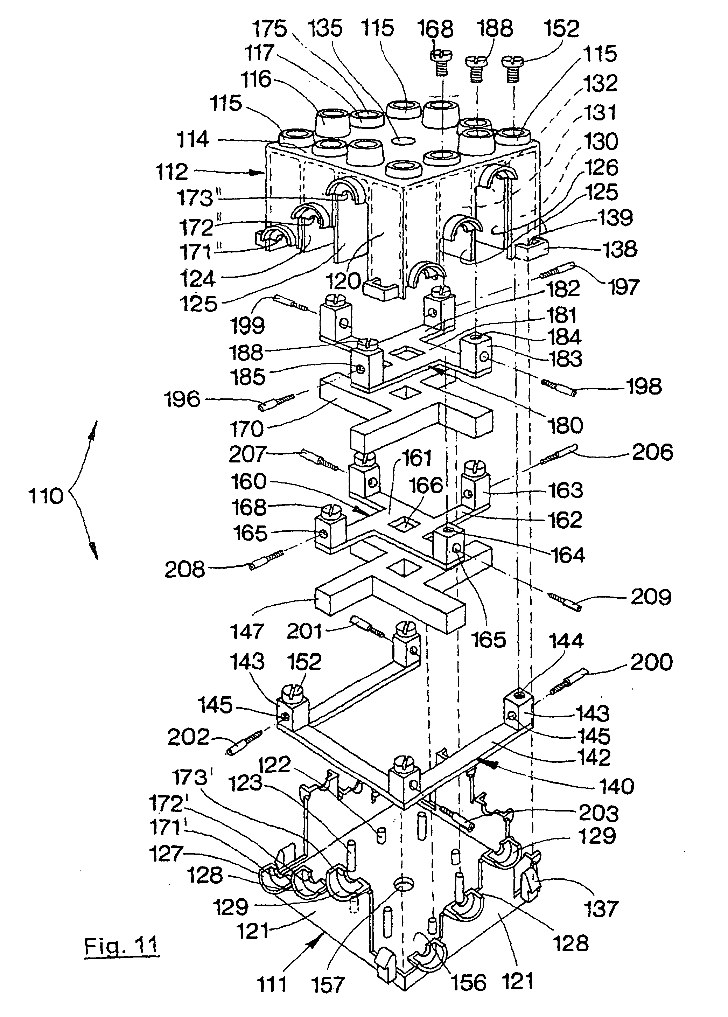

Fig.11 Exploded perspective of the terminal box.

The terminal box 10 comprises a parallelepiped 11 and cover 12, comprising the deck 14 and upper oblong body 15 substantially central to said cover, about equal to it in length and about 1/3 of its width.

The body 11 has four opposing walls 20 and 21.

About halfway along the inside of the walls 20 there are orthogonal diaphragms 22 while about halfway along the inside of the walls 21 there are orthogonal diagraphms 23.

Thickness of the diaphragms 22 is about half that of diaphragms 23.

Said diaphragms extend up to a short distance from the centre of the box their ends 24 being shaped as dihedral angles to form two orthogonal corridors and two pairs of chambers 30-31 and 32-33 respectively on diagonals at 90° one from another.

The base of chambers 32 and 33 lies higher than that of chambers 30 and 31 being about the height of the terminals in the terminal box.

In the chambers 30 and 31 is a first terminal group 40 obtained from a flat conductive lamina comprising quadrangular plates at the ends 42 and 43 joined by a bridge 44.

At the free edges of said quadrangular plates are holes 45, 46 through which pass the screws 52, 53 for the U-shaped terminals 50, 51 with a central threaded hole 54.

The central part 44 of said terminal group 40 rests on the raised corridor that joins chambers 32, 33 while terminals 50 and 51 are placed inside the other chambers 30 and 31.

Close to terminals 50, 51, placed at a short distance from the corner between walls 20 and 21, are pairs of holes 25 and 26 through which can pass the ends of electric lines to be connected up.

Holes 25 can receive wires of 6-10 mm2 cross section while holes 26 can receive wires of a 2.5-4 mm2 cross section.

Placed over said terminal group 40 is a spacer 47 of insulating material, of substantially the same shape and size, but of a thickness about the same as the height of the terminals.

In said spacer are holes 48 and 49 for the terminal screws 52 and 53.

Above said spacer and more or less orthogonal to it is a second terminal group 60, substantially equal to the terminal group 40, with quadrangular ends 61, 62 joined by the bridge 63.

In the quadrangular ends are holes 64 and 65 made for the screws 68, 69 that tighten the terminals 66, 67 substantially equal to terminals 50, 51 already described.

Said terminals are placed inside the chambers 32, 33 a short distance from the corners of walls 20 and 21 of the box opposite the pairs of holes 27 and 28 made in said walls.

The pairs of holes 27 can receive wires of 6-10 mm2 while holes 28 receive wires of 2.5-4 mm2.

Above said terminal group 60 is a spacer 70 of substantially the same size and shape as said terminal group 60 but of a thickness substantially the same as the height of the terminals and having in it holes 71, 72 for passage of the screws 68, 69 that tighten the terminals 66, 67.

Above said spacer again is the flat quadrangular cover 12 that fits inside the walls 20 and 21.

Above said cover is the oblong body 15 inside which is a third terminal group 80 formed of a piece of metal shaped like an overturned "U" and as long as the oblong body.

On the upper surface of said "U" are holes 81-84 for passage of screws 85 that fix terminals like 86, 89 and 87, 88.

The terminals 86, 89 are flat in shape, they are placed at the two ends of the terminal group 80 and have a central threaded hole 90, while terminals 87, 88 are intermedially situated, are U-shaped and have a central hole 54 for the fixing screws 85.

All the tightening screws pass through holes 91-93 made in the deck 14 of the cover 12 and in the oblong body 15.

Opposite the intermediate terminals 87, 88, pairs of holes 18, 19 to take wires of a 2.5-4 mm2 cross section, are made in walls 16 and 17.

Larger wires, diameter 6-10 mm2, can be connected to terminals 86, 89.

As the drawings clearly show, all screws for tightening terminals like 50, 51, 66, 67, 86-89 are accessible through the holes made in the terminal box 40, 60, 80, in the spacers 47 and 70 and in the cover 12 on either side of the central oblong body and in said body.

Thus three superimposed terminal groups 40, 60, 80 are created to receive wires through the holes, through the apertures in the four walls 20, 21 of the box-shaped body and in walls 16 and 17 of the oblong body 15 at the top.

As shown in the figure, the following can, for example, be connected by tightening the terminals from the top of the terminal box:
- four pairs of wires 100-103 with the first lowest terminal group 40;
- four pairs of wires 104-107 with the second terminal group 60;
- four pairs of wires 96-99 with the upper terminal group 80.

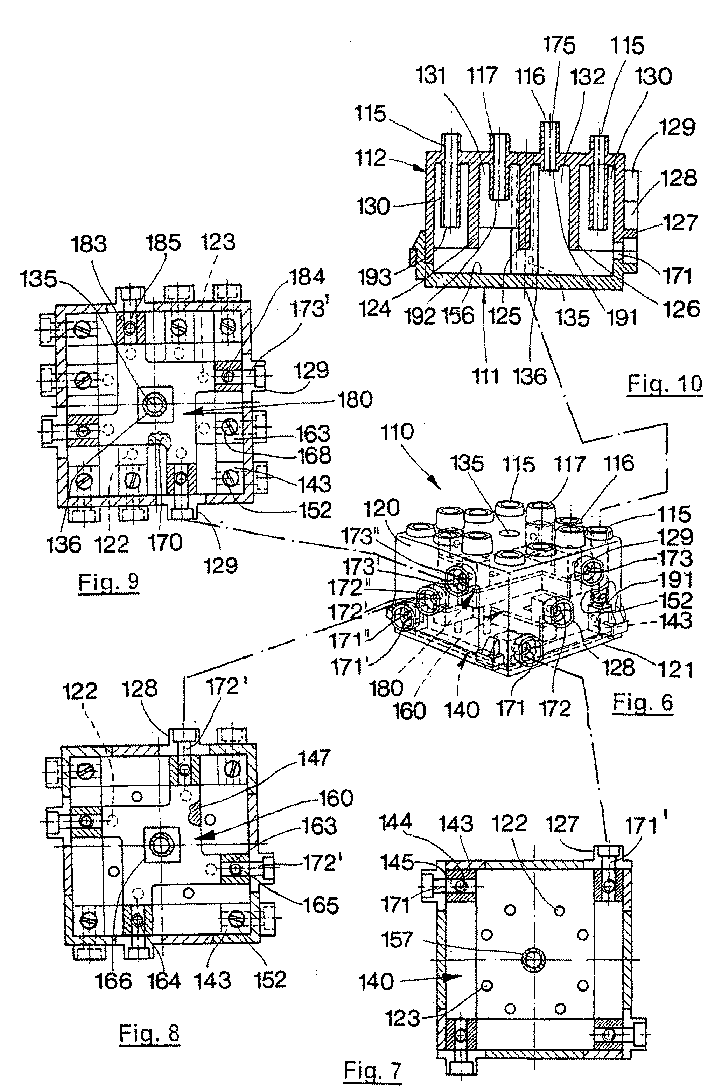

Figures 6-10 illustrate a variant 110 of the described terminal box 10.

The terminal box 110 comprises the box 111 itself and the cover 112. Said cover comprises the upper deck 114 in which is a set of twelve holes 175 circumscribed by a tube, orthogonal to said deck, such as 115, 116, 117, to guide the screws fixing the groups of terminals like 140, 160, 180, and four walls 120.

The box 111 has four walls 121 while on the base are four pins 123 alternating with four more pins 122 about half the height of the first.

In the cover 112 a set of diaphragms like 124, 125, 126 form chambers like 130, 131, 132 that house the terminals.

The terminal group 140 stands on the base of the box 111, said group being formed of a flat U-shaped conducting lamina 142 at whose four corners are fixed four terminals 143 in which are threaded holes 144 for screws 152 and holes 145 through which electric lines 200-203 can be passed for connection to the terminals.

Over said terminal group 140, the spacer 147 is laid resting on pins 122.

Said spacer is of insulating material, its shape being substantially the same as that of the second terminal group 160 and its thickness about half the height of the terminals.

Said second terminal group 160 substantially consists of a square lamina 161 with a central hole 166 in it for passage of a screw to fix the terminal group, with four rectangular extensions 162 to carry the upward-facing terminals 163, geometrical axis of the screws being parallel, at a suitable distance, to the axis of the screws that fix terminal group 140 below.

Terminals like 163 are substantially equal to the described terminals like 143 having in them holes 164 for screws 168 to fix the ends of electric lines 206-209 entering through the holes 165.

Placed over the terminal group 160 is a spacer 170 substantially shaped like the third terminal group 180 but of a thickness about half the height of the terminals.

This third terminal group 180 is similar to the second terminal group being obtained from a square lamina 181 with four rectangular extensions 182 to carry the upward-facing terminals 183 whose geometrical axis is parallel, at a suitable distance, to that of the terminals on the group below.

In said terminals 183 are holes 184 for screws 188 to fix the lines 196-199 that pass through holes 185.

Terminals, like 143 in the first terminal group 140, are placed in chambers like 130, terminals like 163 in the second terminal group 160, are placed in chambers like 131 and terminals like 183 in the third terminal group 180, are placed in chambers like 132.

The holes like 145, 165, 185 through said terminals permit the ends of electric lines to be fixed after passing through holes like 171-173 made in the walls of the terminal box.

Said holes 171-173 are formed by matching the walls 121 of the box 111 with the walls 120 of the cover 112 where the half-holes such as 171',171", 172',172", 173',173" are cut in the edges of walls 120,121.

Said holes 171-173 are surrounded by half-collars 127-129.

A hole 135 is made in the cover 112 for passage of fixing screws.

To said hole there is a cylindrical extension 136 that reaches down to the base 116 of the body 111 at the position of its central hole 117.

From above, screws 152, 168, 188 enter the holes like 175 in tubes like 115 for the first terminal group, like 116 for the second group, like 117 for the third group, so that the base 191, 192, 193 of said tubes 115-117 rests on the relative terminal that guides the screws till they enter the terminal's threaded hole.

When the terminal box is assembled, hooks 137 lock into the inside 139 of rings like 138 on the cover 112 to hold the assembly firmly together.

The hooks are placed close to wall corners low down on the terminal box. The shape of the terminal box can obviously be different and have a different structure though still ensuring easy connection of numerous wires, respectively of different phases, by screwing all the terminals from the top of the terminal box, orthogonally to the position of the electric lines.

As the above disclosure has been described and explained only as an example not limited to this and to show its essential features, numerous variations may be made to it in accordance with industrial, commercial or other requirements and other systems and means be included in it without thereby causing any departure from its sphere of application.

It is therefore understood that the request to patent the invention comprises every equivalent use of the concepts and every equivalent product executed and/or in operation in accordance with any one or more of the chracteristics set forth in the following claims.

## Claims

1. Multiphase and multidirectional terminal box (10, 110) for connection of electric lines (96-107, 196-203, 206-209), of a box-shaped structure (11, 111) with a cover (12, 112) of electrically insulating material, substantially parallelepiped, having a square e rectangular base, there being groups of holes (25-28, 171-173) made in the lateral walls (20, 21, 120, 121) for the terminals of electric lines (100-107, 196-203, 206-209) and a number of terminal groups (40, 60, 140, 160, 180) placed, at various levels, between internal means (22, 23, 47, 70,124, 147, 170) of electrical insulation,
**Characterized in that** the terminal group (40, 60, 140, 160, 180) are each obtained from flat conducting laminae (42-46, 61-63) comprising two quadrangular bodies (42, 43, 61, 62) diagonally joined by an oblong section (44, 63), that carry the terminals (50, 51; 66, 67) near the edges of their free sides, and **in that** from a central point along the four walls (20,21) of the box (11) diaphragms (22, 23) orthogonal to said walls, depart and extend to a short distance from the centre of the box, with ends (24) terminating in dihedral angles, dividing the box into four quadrangular substantially equal chambers (30-33), said chambers being joined by the central corridors left free by the diaphragms, the base of chambers (32, 33) lying diagonally, being higher than the base of the other two chambers (30, 31) lying on a second diagonal at 90°, by about the height of the terminals, a first terminal group (40) being placed inside the two chambers (30, 31) of greater depth with the central part of said terminal group (40) lying above the raised corridor that joins the other two chambers (32, 33) and with the terminals (50, 51) facing downward, there being placed over said first terminal group a first spacer (47) of insulating material of a shape and amplitude substantially the same as that of the terminal group but of a thickness about the same as the height of the terminals, a second terminal group (60), substantially the same as the first, being placed inside the other two chambers (32, 33) with its central part lying above the central part of said first spacer, there being placed over the second terminal group a second spacer (70) of substantially the same shape and amplitude, there being placed above said second spacer the cover (12) of the box-shaped structure, holes (25-28) being made through all the walls close to the insides of which terminals (50, 51, 66, 67) are placed, for passage of electric lines (100-107) to connect to the terminals, all the screws (52, 53, 68, 69) for tightening the terminals being accessible through holes (92, 93) made in the cover (12) of the box-shaped structure (11).

2. Terminal box (10, 110) as in claim 1),
**characterized in that** the terminals (50, 51, 66, 67) in the terminal groups (40, 60) at the different levels are formed of a U-shaped body in which there is a central threaded hole (54) through which the screws (52, 53, 68, 69) tighten said terminals enabling simultaneous tightening to be made of two electric lines (100-107) one on either side of said tightening screw.

3. Terminal box (110) as in claim 1,
**characterized in that** the lateral walls (120) of the box-shaped structure (111) and the lateral walls (121) of the cover (112) match at different levels on the midway line, parallel to the base (156) of the box shaped structure, of the holes (171-173) made in said walls for access of the terminals of the electric lines (196-203, 206-209) and **in that** the flat conducting lamina (142) of a first terminal group (140) placed on the base (156) of the box shaped structure (111) is U-shaped and carries, on the four edges , upward-facing terminals (143) and **in that** the flat conducting lamina (161) of a second terminal group (160) placed above said first terminal group (140) after a first flat spacer (147) of insulating material, is square in shape with four rectangular extensions (162) to carry the upward-facing terminals (163), the geometrical axis of the tightening screws (168) being parallel to the geometrical axes of the screws (152) for tightening the terminals of the first terminal group (140) below, there being placed above said second terminal group (163) and after a spacer (170) of insulating material has been laid over it, a third terminal group (180) substantially the same as the second, there being placed over said terminal groups (140, 163), with interposition of insulating spacers, any further terminal groups substantially similar to the preceding ones, all geometrical axes of the tightening screws (152, 168, 188) for the terminals (143, 163, 183) lying at a reciprocal distance such as will permit accessibility to all the tightening screws through holes (175) made in the cover (112) of the box-shaped structure (111).

## Patentansprüche

1. Mehrphasen- und Mehrrichtungs-Anschlußkasten (10, 110) zum Anschließen von elektrischen Leitungen (96-107, 196-203, 206-209), aus einer kastenförmigen Struktur (11, 111) bestehend mit einer Abdeckung (12, 112) aus elektrisch isolierendem Material, im wesentlichen parallelepiped-förmig mit einer vierkantigen und rechteckigen Basis, mit Gruppen von Löchern (25-28, 171-173) in den Seitenwänden (20, 21, 120, 121) für die Anschlußklemmen von elektrischen Leitungen (100-107, 196-203, 206-209) und einer Anzahl von Klemmengruppen (40, 60, 140, 160, 180), die auf verschiedenen Ebenen zwischen innenliegenden Mitteln (22, 23, 47, 70, 124, 147, 170) zur elektrischen Isolierung positioniert sind.
**Dadurch gekennzeichnet, daß** die Klemmengruppen (40, 60, 140, 160, 180) jeweils aus flachen leitenden Plättchen (42-46, 61-63) bestehen, die zwei viereckige Aufbauten (42, 43, 61, 62) umfassen, welche durch einen länglichen Abschnitt (44, 63) diagonal zusammengefügt sind, und welche die Anschlußklemmen (50, 51, 66, 67) nahe der Kanten ihrer freien Seiten tragen, und **dadurch gekennzeichnet, daß** von einem zentralen Punkt längs der vier Wände (20, 21) eines Kastens (11) Diaphragmas (22, 23) orthogonal zu genannten Wänden ausgehen und sich über einen kurzen Abstand vom Mittelpunkt des Kastens erstrecken, mit Enden (24), die in Raumwinkeln auslaufen und dadurch den Kasten in vier viereckige und im wesentlichen gleiche Kammern (30-33) unterteilen, wobei genannte Kammern durch die mittleren Gänge, die die Diaphragmas freilassen, verbunden sind. Die Basis der Kammern (32, 33) liegt diagonal und höher gegenüber der Basis der anderen beiden Kammern (30, 31), die auf einer zweiten Diagonalen zu 90° liegt, etwa auf der Höhe der Anschlußklemmen. Eine erste Klemmengruppe (40), die im Innern der beiden Kammern (30, 31) mit einer größeren Tiefe positioniert ist, und mit dem mittleren Abschnitt genannter Klemmengruppe (40), die über dem erhöhten Gang liegt, der die beiden anderen Kammern (32, 33) miteinander verbindet, und mit den nach unten gerichteten Anschlußklemmen (50, 51), wobei über genannter ersten Klemmengruppe eine erste Zwischenlage (47) aus Isoliermaterial positioniert ist, die im wesentlichen die Form und Größe wie die der Klemmengruppe hat, aber von einer Dicke ist, die in etwa der Höhe der Anschlußklemmen entspricht. Eine zweite Klemmengruppe (60), die im wesentlichen der ersten gleich ist, ist im Innern der anderen beiden Kammern (32, 33) positioniert, wobei ihr mittlerer Abschnitt über dem mittleren Abschnitt der genannten ersten Zwischenlage liegt. Über der zweiten Klemmengruppe liegt eine zweite Zwischenlage (70), im wesentlichen mit der gleichen Form und Größe wie die erste, wobei über genannter zweiten Zwischenlage die Abdeckung (12) der kastenförmigen Struktur positioniert ist. Die Löcher (25-28) gehen durch alle Wände nahe der Innenflächen, an denen Anschlußklemmen (50, 51, 66, 67) positioniert sind zum Durchgang elektrischer Leitungen (100-107) zum Anschließen an den Klemmen, wobei alle Schrauben (52, 53, 68, 69) zum Festziehen der Anschlußklemmen durch die Löcher (92, 93) in der Abdeckung (12) der kastenförmigen Struktur (11) zugänglich sind.

2. Anschlußkasten (10, 110) wie in Anspruch 1),
**dadurch gekennzeichnet, daß** die Anschlußklemmen (50, 51, 66, 67) in den Klemmengruppen (40, 60) auf den verschiedenen Ebenen von einem U-förmigen Aufbau gebildet werden, in dem ein mittleres Gewindeloch (54) vorhanden ist, durch das die Schrauben (52, 53, 68, 69) die genannten Anschlußklemmen festziehen und das gleichzeitige Festziehen von zwei elektrischen Leitungen (100-107), eine auf jeder Seite genannter Festspannschraube, ermöglichen.

3. Anschlußkasten (110) wie in Anspruch 1),
**dadurch gekennzeichnet, daß** die Seitenwände (120) der kastenförmigen Struktur (111) und die Seitenwände (121) der Abdeckung (112) auf verschiedenen Ebenen an der Mittellinie, parallel zur Basis (156) der kastenförmigen Struktur, der Löcher (171-173) miteinander übereinstimmen, die in genannten Wänden für den Eingang der Anschlußklemmen der elektrischen Leitungen (196-203, 206-209) ausgeführt sind, und **dadurch gekennzeichnet, daß** das flache leitende Plättchen (142) einer ersten Klemmengruppe (140) auf der Basis (156) der kastenförmigen Struktur (111) U-förmig ist und an den vier Kanten nach oben gerichtete Anschlußklemmen (143) trägt und **dadurch gekennzeichnet, daß** das flache leitende Plättchen (161) einer zweiten Klemmengruppe (160), die über genannter ersten Klemmengruppe (140) nach einer ersten flachen Zwischenlage (147) aus Isoliermaterial positioniert ist, in ihrer Form vierkantig ist, mit vier rechteckigen Verlängerungen (162), um die nach oben gerichteten Anschlußklemmen (163) zu tragen, wobei die geometrische Achse der Festspannschrauben (168) parallel zu den geometrischen Achsen der Schrauben (152) verläuft, um die Anschlußklemmen der ersten Klemmengruppe (140) unten festzuziehen. Über genannter zweiten Klemmengruppe (163) und nachdem eine Zwischenlage (170) aus Isoliermaterial darüber gelegt worden ist, ist eine dritte Klemmengruppe (180), die im wesentlichen gleich der zweiten ist, über genannten Klemmengruppen (140, 163) positioniert, mit Einfügung von isolierenden Zwischenlagen. Jede weitere Klemmengruppe ist im wesentlichen den vorhergehenden gleich, alle geometrischen Achsen der Festspannschrauben (152, 168, 188) für die Anschlußklemmen (143, 163, 183) liegen auf einer wechselseitigen Entfernung, so daß die Zugänglichkeit zu allen Festspannschrauben durch die Löcher (175) in der Abdeckung (112) der kastenförmigen Struktur (111) gewährleistet ist.

## Revendications

1. Boîte de jonction à phases multiples et multidirectionnelle (10, 110) pour la connexion des lignes électriques (96-107, 196-203, 206-209), d'une structure en forme de boîte (11, 111) avec un couvercle (12, 112) en matériel électriquement isolant, fondamentalement parallélépipédique, ayant une base carrée ou rectangulaire, contenant des séries de trous (25-28, 171-173) percés dans les parois latérales (20, 21, 120, 121) pour les bornes des lignes électriques (100-107, 196-203, 206-209) et un nombre de groupes de bornes (40, 50, 140, 160, 180) placées, à des niveaux différents, parmi les moyens internes (22, 23, 47, 70, 124, 147, 170) d'isolation électrique,
**Caractérisée par le fait que** les groupes de bornes (40, 60, 140, 160, 180) sont obtenus, chacun d'eux, de feuillets plats conducteurs (42-46, 61-63) incluant deux corps quadrangulaires (42, 43, 61, 62) joints diagonalement par une section oblongue (44, 63), qui soutient les bornes (50, 51, 66, 67) auprès des bords de leurs côtés libres, et **par le fait que** d'un point central le long des quatre parois (20, 21) de la boîte (11) les diaphragmes (22, 23), orthogonaux aux dites parois, s'éloignent et s'étendent jusqu'à une petite distance du centre de la boîte, avec les extrémités (24) se terminant en angles dièdres, ainsi partageant la boîte en quatre chambres quadrangulaires fondamentalement égales (30, 33), les dites chambres étant jointes au moyen des couloirs centraux laissés libres par les diaphragmes, la base des chambres (32, 33) étant située diagonalement et plus en haut, par égard à la base des deux autres chambres (30, 31) situées sur une deuxième diagonale à 90°, d'environ la hauteur des bornes, un premier groupe de bornes (40) étant placées à l'intérieur des deux chambres (30, 31) avec une profondeur plus grande et avec la partie centrale du dit groupe de bornes (40) située au-dessus du couloir surélevé joignant les deux autres chambres (32, 33) et avec les bornes (50, 51) tournées en bas, où un premier écarteur (47) en matériel isolant a été placé au-dessus du dit premier groupe de bornes, ayant une forme et une amplitude fondamentalement égales à celles du groupe de bornes, mais avec une épaisseur presque égale à la hauteur des bornes, un deuxième groupe de bornes (60), fondamentalement le même que le premier, étant placées à l'intérieur des deux autres chambres (32, 33) avec sa partie centrale située au-dessus de la partie centrale du dit premier écarteur, un deuxième écarteur (70) étant placé au-dessus du deuxième groupe de bornes et ayant fondamentalement la même forme et amplitude que le premier et où on a placé, au-dessus du dit deuxième écarteur, le couvercle (12) avec une structure en forme de boîte, des trous (25-28) ayant été percé à travers les parois auprès des intérieurs où les bornes (50, 51, 65, 67) sont placées, pour le passage des lignes électriques (100-107) et la connexion aux bornes, toutes les vis (52, 53, 68, 69) pour le serrage des bornes étant accessibles à travers les trous (92, 93) percés dans le couvercle (12) de la structure en forme de boîte (11).

2. Boîte à bornes (10,110) comme chez la revendication 1),
**caractérisée par le fait que** les bornes (50, 51, 66, 67) dans les groupes de bornes (40, 60) à des niveaux différents sont constituées par un corps en forme de U dans lequel se trouve un trou central fileté (54), à travers lequel les vis (52, 53, 68, 69) serrent les dites bornes et permettent d'effectuer le serrage simultané des deux lignes électriques (100-107), chacune de chaque côté de la dite vis de serrage.

3. Boîte à bornes (10, comme chez la revendication 1),
**caractérisée par le fait que** les parois latérales (120) de la structure en forme de boîte (111) et les parois latérales (121) du couvercle (112) se correspondent à des niveaux différents sur la ligne médiane, parallèle à la base (156) de la structure en forme de boîte, des trous (171-173) percés dans les dites parois pour l'accès des bornes des lignes électriques (196-203, 206-209), **par le fait que** le feuillet plat conducteur (142) d'un premier groupe de bornes (140) placées sur la base (156) de la structure en forme de boîte (111) a la forme de U et soutient, sur les quatre bords, les bornes tournées en haut (143), et **par le fait que** le feuillet plat conducteur (161) d'un deuxième groupe de bornes (160) placées au-dessus du dit premier groupe de bornes (140) après un premier écarteur plat (147) en matériel isolant, a la forme d'un carré avec quatre extensions rectangulaires (162) pour soutenir les bornes tournées en haut (163), l'axe géométrique des vis de serrage (168) étant parallèle à l'axe géométrique des vis (152) pour le serrage des bornes du premier groupe de bornes (140) en bas, ayant été placé au-dessus du dit deuxième groupe de bornes (163) et après qu'un écarteur (170) en matériel isolant aura été placé au dessus de lui, un troisième groupe de bornes (180) fondamentalement égal au deuxième, ayant été placé au-dessus des dits groupes de bornes (140, 163), avec l'interposition d'écarteurs isolants, tous les autres groupes de bornes fondamentalement similaires aux précédents, tous les axes géométriques des vis de serrage (162, 168, 188) pour les bornes (143, 163, 183) étant situés à une distance réciproque telle qu'elle permettra l'accessibilité à toutes les vis de serrage à travers les trous (175) percés dans le couvercle (112) de la structure en forme de boîte (111).
